# EUROPÄISCHE PATENTANMELDUNG

(11) **EP 1 215 106 A2**
(43) Veröffentlichungstag der Anmeldung: **19.06.2002**
(21) Anmeldenummer: 01127631.8
(22) Anmeldetag: 20.11.2001
(51) Int. Cl.: B62D 25/08

(54) **Tragstruktur einer selbsttragender Karosserie**

(30) Priorität: 12.12.2000 DE 10061848
(71) Anmelder: DaimlerChrysler AG, 70567 Stuttgart (DE)
(72) Erfinder: Mayrhofer, Robert, 71032 Böblingen (DE); Mehrholz, Ralf, 70372 Stuttgart (DE)

(57) **Zusammenfassung**

Die Erfindung betrifft eine Tragstruktur (1) einer selbsttragenden Karosserie mit mindestens einem aus zwei Längenabschnitten gefügten Hohlträger (12), dessen Längenabschnitte (15,16) im Bereich einer quer zur Hohlträgerlängsachse verlaufenden Fügeebene (18) miteinander verbunden sind, wobei die Endbereiche der Längenabschnitte einander überlappend gefügt sind.

Erfindungsgemäß verlaufen die einander überlappende Endbereiche der Längenabschnitte (15,16) schräg zur Mittellängsachse (17) des Hohlträgers im Fügebereich.

## Beschreibung

Die Erfindung betrifft Tragstruktur einer selbsttragenden Karosserie mit mindestens einem aus zwei Längenabschnitten gefügten Hohlträger gemäß dem Oberbegriff des Patentanspruchs 1.

Im Serienfahrzeugbau, beispielsweise bei der Mercedes C-Klasse, ist es üblich, quer zur Mittellängsachse zusammengesetzte Hohlträger in der Tragstruktur zu verwenden, um zum Beispiel unterschiedliche Fahrzeuglängen bei gleicher Rohbauplattform zu realisieren. Dazu werden die Endbereiche zweier Längenabschnitte eines Hohlträgers ineinander gelegt und miteinander beispielsweise durch Punktschweißen verbunden, so daß die Endbereiche der Längenabschnitte überlappend gefügt sind.

Die sich aus den überlappenden Endbereichen ergebende Schnittstelle führt im Längsverlauf des Hohlträgers zu einer Steifigkeitsänderung. Insbesondere bei Crashbelastungen in Richtung der Mittellängsachse kann der Fügebereich durch den sich ergebenden Steifigkeitssprung weniger Energie absorbieren.

Aufgabe der Erfindung ist daher eine Tragstruktur einer selbsttragenden Karosserie zu entwickeln, bei der die Anbindungsintensität zwischen zwei Längenabschnitten eines Hohlträgers verbessert wird.

Erfindungsgemäß wird die Aufgabe durch die Merkmale des Patentanspruchs 1 gelöst.

Mit der schräg zur Mittellängsachse des Hohlträgers verlaufenden Fügeebene wird erreicht, daß sich der Fügebereich über einen größeren Hohlträgerlängsabschnitt erstreckt. Die Steifigkeitsänderung, die durch die Überlappung und Verbindung der Endbereiche entsteht, verteilt sich dementsprechend über den Hohlträgerlängsabschnitt, in dem die Fügeebene verläuft. Der durch die größere Anbindungslänge verringerte Steifigkeitssprung zwischen den beiden Längenabschnitten bewirkt zudem ein besseres Verhalten des Hohlträgers bei Schwingungsbelastungen, da jeder einzelne Verbindungspunkt entsprechend weniger belastet wird.

Insbesondere bei Längsträgern, deren Fügebereich sich in einer Knautschzone der Karosserie befindet, ist trotz der Verdopplung der Blechdicken im Fügebereich ein Auffalten des Hohlträgers in einer parallel zur Mittellängsachse wirkenden Belastungsrichtung möglich. Die Längenabschnitte können entsprechend dimensioniert werden.

In Abhängigkeit der Anordnung des Hohlträgers kann die Fügeebene je nach gewünschter Befestigungsintensität um etwa 15°-75° bezüglich der Mittelachse des Längsträgers im Fügebereich geneigt sein.

In einer besonders bevorzugten Ausführungsform ist der Längsträger im Bodenbereich eines Kraftwagenhecks angeordnet, um unterschiedliche Fahrzeuglängen bei gleicher Rohbauplattform herstellen zu können. Die Fügeebene ist von hinten oben nach vorne unten ausgerichtet, so daß im Falle eines Heckaufpralls ein gezieltes Deformieren erreicht wird.

Für die Überlappung der Endbereiche der Längenabschnitte ist einer der Endbereiche unter Anpassung an den Querschnitt des anderen Endbereichs aufgeweitet. Alternativ ist es auch möglich einen der Endbereiche unter Anpassung an den Hohlquerschnitt des anderen Endbereichs zu verjüngen.

Als besonders kostengünstige Fügetechnik kann Punktschweißen eingesetzt werden, wobei die Endbereiche der Längenabschnitte mit einer Doppelpunktschweißreihe miteinander verbunden werden können.

Für die Ausbildung eines zweischaligen geschlossenen Hohlprofilträgers weisen die Längenabschnitte des Hohlträgers einen einseitig offenen u-förmigen Querschnitt auf. Längenabschnitte mit L-förmigen Querschnitt können in gleicher Art und Weise miteinander verbunden werden.

Nach dem Fügen der schräg verlaufenden Endbereiche der Längenabschnitte wird die offene Seite mit einem durchgängigen Schließblech an den Flanschen des Hohlprofils verschweißt.

Bei Hohlträgern, die beispielsweise durch Hydroumformen hergestellt sind, weisen die Längenabschnitte ein umlaufend geschlossenes Hohlprofil auf, so daß die Endbereiche der Längenabschnitte ineinander gesteckt und beispielsweise durch eine umlaufende Schweißnaht miteinander verbunden werden können.

Weitere vorteilhafte Ausgestaltungen der Erfindung werden nachfolgend anhand der Zeichnung beschrieben. Dabei zeigen:
- Fig. 1: eine Übersichtsdarstellung eines Kraftwagenhecks in einer Ansicht schräg von oben,
- Fig. 2: eine Schnittdarstellung gemäß der Linie II-II in Fig. 1 sowie
- Fig. 3: eine Einzeldarstellung des zusammengesetzten Längsträgers in einer Ansicht schräg von der Seite.

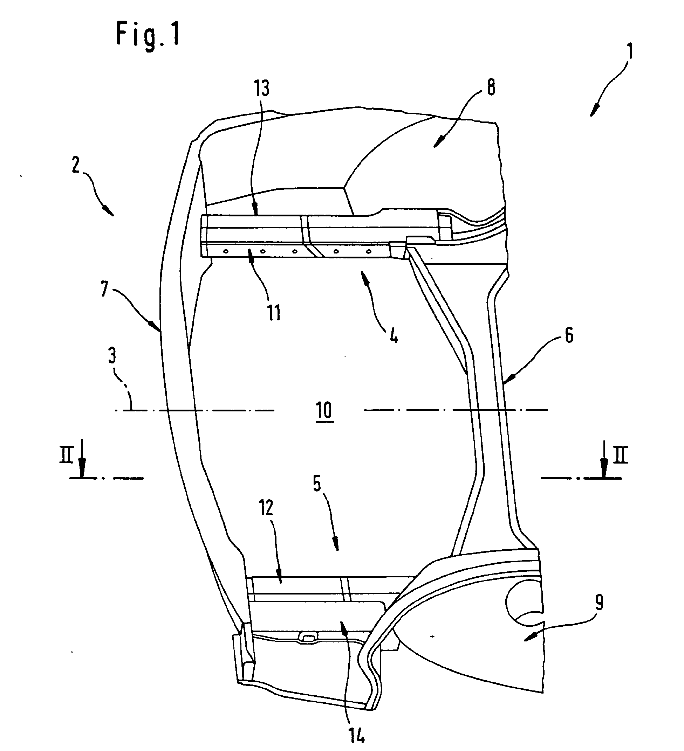

In Fig. 1 ist die Tragstruktur 1 eines Kraftwagenhecks 2 einer Kraftwagenkarosserie dargestellt. Die Tragstruktur 1 umfaßt im wesentlichen zwei bezüglich der Längs-Mittel-Ebene 3 spiegelsymmetrisch angeordnete hintere Längsträger 4 und 5, die über einen hinteren Querträger 6 und einen Stoßfänger 7 miteinander verbunden sind und zur Knautschzone im Heckbereich des Kraftwagens gehören.

Seitlich werden die hinteren Längsträger 4 und 5 von Radhäusern 8 und 9 der nicht dargestellten Hinterräder begrenzt und erstrecken sich nach vorn weiter bis zur C-Säule. Nach unten sind die Längsträger 4 und 5 an ein Bodenblech 10 angeschlossen.

Jeder der Längsträger 4 und 5 ist der Länge nach aus einem Hohlträger 11 bzw. 12 und aus einem Schließblech 13 bzw. 14 so zusammengesetzt, daß ein geschlossener Hohlprofilquerschnitt gebildet ist.

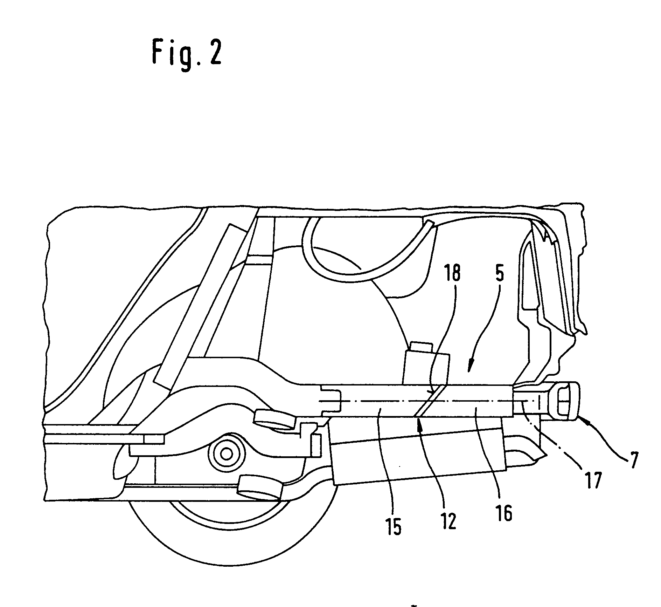

Wie aus der Schnittdarstellung in Fig. 2 hervorgeht, ist der als Innenschale ausgebildete Hohlträger 12 des hinteren Längsträgers 5 aus jeweils zwei Längenabschnitten 15 und 16 entlang einer schräg zur Mittellängsachse 17 des Hohlträgers 12 verlaufenden Fügeebene 18 zusammengesetzt. Äquivalent dazu ist der Hohlträger 11 des Längsträgers 4 aufgebaut.

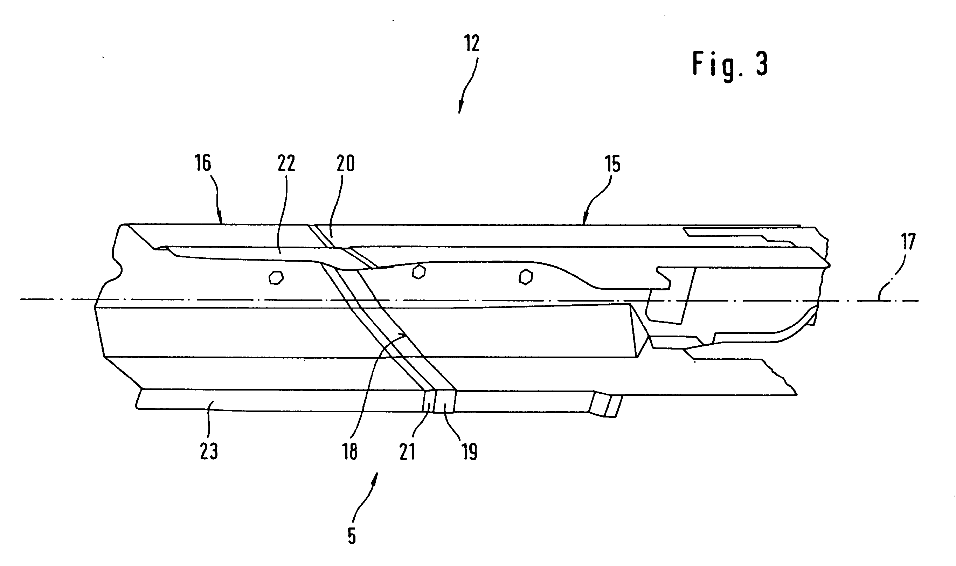

Anhand der Einzeldarstellung in Fig. 3 soll im folgenden der Aufbau und die Funktionsweise des Hohlträgers 12 näher erläutert werden. Aufgrund der Spiegelsymmetrie lassen sich die Ausführungen auf den Hohlträger 11 des hinteren Längsträgers 4 übertragen.

Für die etwa um 45° geneigte Fügeebene 18 sind an den einen einseitig offenen u-förmigen Querschnitt aufweisenden Längenabschnitten 15 und 16 jeweils schräg zur Mittellängsachse 17 verlaufende Endbereiche 19 und 20 vorgesehen. Um Längenabschnitte 15 und 16 miteinander durch Punktschweißen verbinden zu können, ist der sich verjüngende Querschnitt des Endbereichs 19 an den Hohlquerschnitt des Endbereichs 20 angepaßt, so daß der Endbereich 20 bis zu einem Absatz 21 auf den Endbereich 19 aufgeschoben werden kann. Damit läßt sich in einfacher Weise ein Toleranzausgleich in Längsrichtung des Hohlträgers 12 durchführen.

Nach dem Verbinden der Längenabschnitte 15 und 16 wird das Schließblech 14 mit den an den Längsseiten des Hohlträgers 12 angeformten Flanschen 22 und 23 durch Punktschweißen verbunden, so daß sich ein geschlossener Hohlquerschnitt des Längsträgers 5 ergibt. Der Längsträger 5 kann in bekannter Art mit Sollbiegestellen versehen sein, um im Falle eines Heckaufpralls Energie zu absorbieren.

Mit der schräg zur Mittellängsachse 17 des Hohlträgers 12 verlaufenden Fügeebene 18 wird die Anbindungslänge zwischen den Längenabschnitten 15 und 16 verlängert und somit die Anbindungsintensität. Bei in Richtung der Mittellängsachse 17 wirkenden Belastungskräften, beispielsweise bei einem Heckaufprall, verteilt sich die Kraft in der geneigten Fügeebene, so daß eine gleichmäßig Lastverteilung auf die Schnittstelle erzielt wird, als bei einer senkrecht zur Mittellängsachse 17 verlaufenden Fügeebene. Mit der Verlängerung der Anbindungslänge läßt sich zudem ein Ausknicken des Längsträgers im Bereich der Fügeebene verzögern bzw. durch die Neigung der Fügeebene von hinten oben nach vorne unten stabilisieren.

## Patentansprüche

1. Tragstruktur einer selbsttragenden Karosserie mit mindestens einem aus zwei Längenabschnitten gefügten Hohlträger, dessen Längenabschnitte im Bereich einer quer zur Hohlträgerlängsachse verlaufenden Fügeebene miteinander verbunden sind, wobei die Endbereiche der Längenabschnitte einander überlappend gefügt sind,
**dadurch gekennzeichnet,**
**daß** die einander überlappenden Endbereiche (19, 20) der Längenabschnitte (15, 16) schräg zur Mittellängsachse (17) des Hohlträgers (12) im Fügebereich verlaufen.

2. Tragstruktur nach Anspruch 1,
**dadurch gekennzeichnet,**
**daß** der Hohlträger (11, 12) eine Teilschale eines aus mehreren Teilschalen zusammengesetzten Längsträgers (4, 5) ist, bei dem die Fügeebene (18) in einem zu einer Knautschzone der Karosserie gehörenden Längenbereich angeordnet ist.

3. Tragstruktur nach Anspruch 2,
**dadurch gekennzeichnet,**
**daß** die Fügeebene (18) unter einem Winkel zwischen 15° und 75° geneigt zur Mittellängsachse (17) des Hohlträgers (12) im Bereich der Fügeebene (18) verläuft.

4. Tragstruktur nach Anspruch 3,
**dadurch gekennzeichnet,**
**daß** der Längsträger (4, 5) im Bodenbereich des Kraftwagenhecks (2) angeordnet ist, wobei die Fügeebene (18) von hinten oben nach vorn unten geneigt verläuft.

5. Tragstruktur nach Anspruch 1,
**dadurch gekennzeichnet,**
**daß** einer der Endbereiche (19) unter Anpassung an den Hohlquerschnitt des anderen Endbereichs (20) verjüngt ist.

6. Tragstruktur nach Anspruch 5,
**dadurch gekennzeichnet,**
**daß** die Endbereiche (19, 20) der Längenabschnitte (15, 16) durch Punktschweißen miteinander verbunden sind.

7. Tragstruktur nach Anspruch 1,
**dadurch gekennzeichnet,**
**daß** die Längenabschnitte (15, 16) des Hohlträgers (12) einen einseitig offenen u-förmigen Querschnitt aufweisen.

8. Tragstruktur nach Anspruch 7,
**dadurch gekennzeichnet,**
**daß** die offene Seite der zum Hohlträger (12) verbundenen Längenabschnitte (15, 16) mit einem Schließblech (14) geschlossen ist.

9. Tragstruktur nach Anspruch 1,
**dadurch gekennzeichnet,**
**daß** die Längenabschnitte (15, 16) des Hohlträgers (12) einen umlaufend geschlossenen Hohlprofilquerschnitt aufweisen.
